# EUROPEAN PATENT APPLICATION

(11) **EP 4 132 220 A1**
(43) Date of publication of application: **08.02.2023**
(21) Application number: 21776259.0
(22) Date of filing: 26.03.2021
(51) Int. Cl.: H05B 6/06, H05B 6/04, H02M 7/493

(54) **INDUCTIVE HEATING DEVICE AND METHOD FOR CONTROLLING INDUCTIVE HEATING DEVICE**

(30) Priority: 27.03.2020 KR 20200037649
(71) Applicant: LG Electronics, Inc., Yeongdeungpo-gu Seoul 07336 (KR)
(72) Inventor: KIM, Gwangrok, Seoul 08592 (KR); JANG, Ho Yong, Seoul 08592 (KR); LEE, Jung Youn, Seoul 08592 (KR); SONG, Seongkyu, Seoul 08592 (KR)
(74) Representative: Ter Meer Steinmeister & Partner
(86) International application number: PCT/KR2021/003775
(87) International publication number: WO 2021/194302

(57) **Abstract**

The present disclosure relates to an induction heating device and a control method thereof. In one embodiment, at a time of a simultaneous operation of a first working coil operating at a first driving frequency and a second working coil operating at a second driving frequency, control for removing interference noise is performed based on a difference between the first driving frequency and the second driving frequency. An induction heating device of one embodiment may adjust the duty ratio of a switching signal provided to a first inverter circuit after adjusting the first driving frequency to adjust the actual output value of the first working coil to a value the same as the required output value of the first working coil.

## Description

### Technical Field

Disclosed herein are an induction heating device and a control method thereof.

### Background Art

Various types of cooking devices are used at homes or restaurants to heat food items. Gas ranges that use gas as a fuel have been widely used as one of the cooking devices. Currently, devices that heat a container by using electric energy are used.

Methods in which a container is heated using electric energy include a resistance heating method and an induction heating method. In terms of the resistance heating method, heat energy is generated when electric energy is supplied to a metallic resistance wire or a non-metallic heat generation element such as silicon carbide, and the generated heat energy is used to heat a container. In terms of the induction heating method, a magnetic field is generated around a working coil when electric energy is supplied to the working coil, eddy current is produced in a metallic container by the magnetic field, and the container itself is heated.

The principle of the induction heating method is described in more detail as follows. As power is supplied to an induction heating device, a high-frequency voltage having predetermined magnitude is supplied to a working coil. Accordingly, an induction field is produced around the working coil in the induction heating device. When a magnetic line of force of the produced induction field passes through the bottom of a metallic vessel placed on the working coil, eddy currents are generated at the inside of the bottom of the vessel. As the generated eddy currents flow through the vessel, the vessel itself is heated.

The induction heating devices includes two or more heating zones and two or more working coils corresponding to the two or more heating zones. For example, in the case of an induction heating device having two heating zones, when a user provides containers respectively on the two heating zones to perform cooking at the same time, power for driving is supplied to each of the two working coils. Each of the working coils operates at a driving frequency corresponding to a required output value set by the user.

When a difference between the driving frequencies of two working coils is included in an audio frequency band (e.g., 2 kHz to 20 kHz) at a time of a simultaneous operation of the two working coils, interference noise caused by the driving of the working coils is generated. The generated interference noise causes inconvenience to the user who uses the induction heating device, and leads the user to think that the induction heating device is not working correctly.

One of the ways of removing interference noise that is generated when two or more working coils operate is to adjust the driving frequency of an operating working coil such that the difference between the driving frequencies of the working coils is outside the audio frequency band. However, as the driving frequency of the operating working coil is adjusted, the actual output value of the working coil does not match a required output value set by the user.

For example, as the driving frequency of the operating working coil decreases to remove interference noise, the actual output value of the working coil becomes greater than the required output value, raising the possibility that a container overheats. Additionally, as the driving frequency of the operating working coil increases to remove interference noise, the actual output value of the working coil becomes less than the required output value, raising the possibility that a container is not sufficiently heated.

### Description of Invention

### Technical Problems

The objective of the present disclosure is to provide an induction heating device and a control method thereof that maintains the output value of each working coil at the same value as a required output value set by a user while preventing the generation of interference noise, when two or more working coils operate at the same time.

Aspects according to the present disclosure are not limited to the above ones, and other aspects and advantages that are not mentioned above can be clearly understood from the following description and can be more clearly understood from the embodiments set forth herein. Additionally, the aspects and advantages in the present disclosure can be realized via means and combinations thereof that are described in the appended claims.

### Technical Solutions

In one embodiment of the present disclosure, control for removing interference noise is performed based on a difference between a first driving frequency and a second driving frequency, when a first working coil operating at the first driving frequency and a second working coil operating at the second driving frequency operate at the same time.

That is, an induction heating device of one embodiment sets the difference between the first driving frequency and the second driving frequency to be equal to a predetermined noise avoidance value (e.g., 22kHZ) when the difference between the first driving frequency and the second driving frequency is included in a first predetermined reference range (e.g., 8 kHz or greater and less than 20 kHZ).

Additionally, the induction heating device of one embodiment sets the first driving frequency and the second driving frequency to the same value when the difference between the first driving frequency and the second driving frequency is included in a second predetermined reference range (e.g., 2 kHz or greater and less than 8 kHZ). Based on the control, the difference between the first driving frequency and the second driving frequency is outside an audio frequency band or becomes 0, and interference noise is removed.

Further, the induction heating device according to the present disclosure adjusts the magnitude of the first driving frequency such that the difference between the first driving frequency and the second driving frequency may be set to the same value as the predetermined noise avoidance value when the difference between the first driving frequency and the second driving frequency is included in the first predetermined reference range. Since the magnitude of the first driving frequency is adjusted as described above, the actual output value of the first working coil may differ from a required output value of the first working coil set by the user.

To solve the problem, the induction heating device of one embodiment adjusts the duty ratio of a switching signal provided to a first inverter circuit that supplies electric current to the first working coil. As the duty ratio of the switching signal provided to the first inverter circuit is adjusted, the output value of the first working coil corresponding to the driving frequency of the first working coil changes. To solve the problem, the induction heating device of one embodiment may adjust the actual output value of the first working coil to be equal to the required output value of the first working coil by adjusting the duty ratio of the switching signal provided to the first inverter circuit, after adjusting the first driving frequency.

The induction heating device of one embodiment comprises a first working coil, a first inverter circuit configured to operate at a first driving frequency that corresponds to a first required output value of the first working coil and supplying electric current to the first working coil, a second working coil, a second inverter circuit configured to operate at a second driving frequency that corresponds to a second required output value of the second working coil and is greater than the first driving frequency and supplying electric current to the second working coil, and a controller configured to set a difference between the first driving frequency and the second driving frequency to be equal to a predetermined noise avoidance value by adjusting a duty ratio of a switching signal input to the first inverter circuit and magnitude of the first driving frequency, when the difference between the first driving frequency and the second driving frequency is included in a first predetermined reference range.

In one embodiment of the present disclosure, when the difference between the first driving frequency and the second driving frequency is included in the first predetermined reference range, the controller changes the duty ratio of the switching signal input to the first inverter circuit to a predetermined reference duty ratio and changes magnitude of the first driving frequency to a predetermined noise avoidance frequency.

In one embodiment of the present disclosure, the noise avoidance frequency is a value obtained by subtracting the noise avoidance value from the second driving frequency.

In one embodiment of the present disclosure, the controller increases the duty ratio of the switching signal input to the first inverter circuit when an actual output value of the first working coil is less than the first required output value after the magnitude of the first driving frequency changes.

In one embodiment of the present disclosure, the controller decreases the duty ratio of the switching signal input to the first inverter circuit when an actual output value of the first working coil is greater than the first required output value after the magnitude of the first driving frequency changes.

In one embodiment of the present disclosure, an actual output value of the first working coil is maintained to be the same as the first required output value after the duty ratio of the switching signal input to the first inverter circuit is adjusted.

In one embodiment of the present disclosure, the controller sets the first driving frequency and the second driving frequency to the same value when the difference between the first driving frequency and the second driving frequency is included in a second predetermined reference range.

In one embodiment of the present disclosure, a control method of an induction heating device, which comprises a first working coil, a first inverter circuit configured to operate at a first driving frequency that corresponds to a first required output value of the first working coil and supplying electric current to the first working coil, a second working coil, and a second inverter circuit configured to operate at a second driving frequency that corresponds to a second required output value of the second working coil and is greater than the first driving frequency and supplying electric current to the second working coil, comprises calculating a difference between the first driving frequency and the second diving frequency, comparing the difference between the first driving frequency and the second driving frequency with a predetermined reference range, and setting the difference between the first driving frequency and the second driving frequency to be equal to a predetermined noise avoidance value by adjusting a duty ratio of a switching signal input to the first inverter circuit and magnitude of the first driving frequency, when the difference between the first driving frequency and the second driving frequency is included in the predetermined reference range.

In one embodiment of the present disclosure, setting the difference between the first driving frequency and the second driving frequency to be equal to a predetermined noise avoidance value comprises changing the duty ratio of the switching signal input to the first inverter circuit to a predetermined reference duty ratio when the difference between the first driving frequency and the second driving frequency is included in the first predetermined reference range, and changing the magnitude of the first driving frequency to a predetermined noise avoidance frequency.

In one embodiment of the present disclosure, the noise avoidance frequency is a value obtained by subtracting the noise avoidance value from the second driving frequency.

In one embodiment of the present disclosure, setting the difference between the first driving frequency and the second driving frequency to be equal to a predetermined noise avoidance value further comprises increasing the duty ratio of the switching signal input to the first inverter circuit when an actual output value of the first working coil is less than the first required output value after the magnitude of the first driving frequency changes.

In one embodiment of the present disclosure, setting, setting the difference between the first driving frequency and the second driving frequency to be equal to a predetermined noise avoidance value further comprises decreasing the duty ratio of the switching signal input to the first inverter circuit when an actual output value of the first working coil is greater than the first required output value after the magnitude of the first driving frequency changes.

In one embodiment of the present disclosure, an actual output value of the first working coil is maintained to be the same as the first required output value after the duty ratio of the switching signal input to the first inverter circuit is adjusted.

The control method of one embodiment further comprises setting the first driving frequency and the second driving frequency to the same value when the difference between the first driving frequency and the second driving frequency is included in a second predetermined reference range. Advantageous Effects

In the embodiments of the present disclosure, when two or more working coils operate at the same time, the output value of each working coil is maintained at the same value as a required output value set by a user, and the generation of interference noise caused by the working coils is prevented.

### Brief Description of Drawings

FIG. 1 is an exploded perspective view showing an induction heating device of one embodiment.
FIG. 2 is a circuit diagram of the induction heating device of one embodiment.
FIG. 3 is a graph showing output values corresponding to driving frequencies of each working coil when two working coils operate.
FIG. 4 is a waveform diagram showing the duty ratio of a switching signal input to an inverter circuit of the induction heating device of one embodiment.
FIG. 5 is a graph showing a change in the output values of a working coil, based on the adjustment of duty ratios of switching signals input to the inverter circuit of the induction heating device of one embodiment and the adjustment of driving frequencies of the working coil.
FIG. 6 is a graph showing a change in the driving frequency and output value of a working coil, under a divide mode noise avoidance control of the induction heating device of one embodiment.
FIG. 7 is a graph showing a change in the driving frequency and output value of a working coil, under a divide mode noise avoidance control of an induction heating device of another embodiment.
FIG. 8 is a graph showing a change in the driving frequency and output value of a working coil, under a divide mode noise avoidance control of an induction heating device of yet another embodiment.
FIG. 9 is a flowchart showing a control method of an induction heating device of one embodiment.
FIG. 10 is a flowchart showing a control method of an induction heating device of another embodiment.
FIG. 11 is a flowchart showing a process of performing divide mode noise avoidance control in the control method of an induction heating device of another embodiment.

### Detailed Description of Exemplary Embodiments

The above-described aspects, features and advantages are specifically described hereafter with reference to the accompanying drawings such that one having ordinary skill in the art to which the present disclosure pertains can embody the disclosure easily. In the *disclosure, detailed description* of known technologies in relation to the disclosure *is* omitted if it is deemed to *make* the *gist* of the *disclosure* unnecessarily *vague.* Hereafter, preferred embodiments according to the disclosure are specifically described with reference to the accompanying drawings. In the drawings, identical reference numerals can denote identical or similar components.

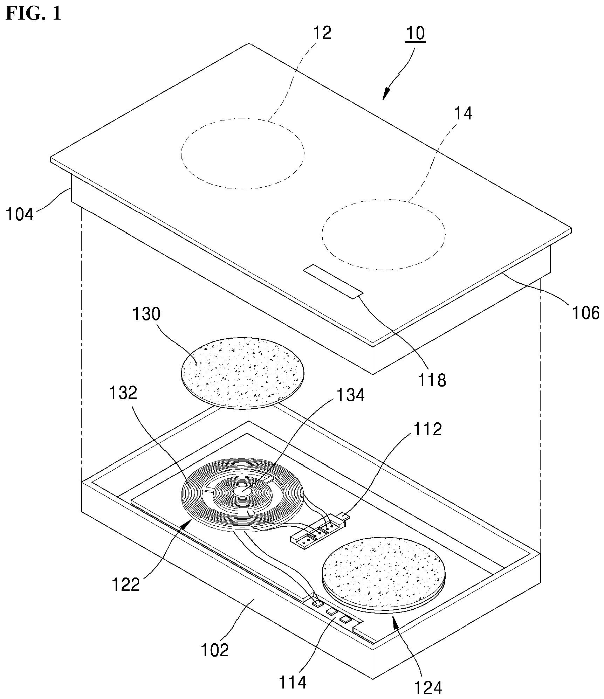

FIG. 1 is an exploded perspective view showing an induction heating device of one embodiment.

Referring to FIG. 1, the induction heating device 10 of one embodiment comprises a case 102 constituting a main body of the induction heating device 10, and a cover plate 104 being coupled to the case 102 and sealing the case 102.

The cover plate 104 is coupled to the upper surface of the case 102, and seals a space formed in the case 102 from the outside. The cover plate 104 comprises an upper plate part 106 on which a container for cooking a food item is placed. In one embodiment of the present disclosure, the upper plate part 106 may be made of a tempered glass material such as ceramic glass, but the material for the upper plate part 106 may vary depending on embodiments.

A heating zone 12, 14 respectively corresponding to a working coil assembly 122, 124 is formed on the upper plate part 106. To allow a user to recognize the position of the heating zone 12, 14 clearly, lines or figures corresponding to the heating zone 12, 14 may be printed or expressed on the upper plate part 106.

The case 102 may be formed into a cuboid the upper portion of which is open. The working coil assembly 122, 124 for heating a container is disposed in the space of the case 102. Additionally, an interface part 114 is provided in the case 102, and performs the function of allowing the user to supply power or to adjust a power level of each heating zone 12, 14 and the function of displaying information on the induction heating device 10. The interface part 114 may be embodied as a touch panel that enables a touch-based input of information input and a display of information, but depending on embodiments, an interface 114 having a different structure may be used.

A manipulation zone 118 is formed on the upper plate part 106 and disposed in a position corresponding to the position of the interface part 114. For the user's manipulation, characters or images and the like may be printed in the manipulation zone 118. The user may touch a specific point of the manipulation zone 118 with reference to the characters or images printed in advance in the manipulation zone 118, to perform a desired manipulation. Further, information output by the interface part 114 may be displayed through the manipulation zone 118.

A power supply part 112 for supplying power to the working coil assembly 122, 124 or the interface part 114 is disposed in the space of the case 102.

In the embodiment of FIG. 1, two working coil assemblies, i.e., a first working coil assembly 122 and a second working coil assembly 124, disposed in the case 102 are illustrated exemplarily, but depending on embodiments, three or more working coil assemblies may be disposed in the case 102.

The working coil assemblies 122, 124 comprises a heat insulation sheet for protecting a coil from heat that is generated by a working coil forming an induction field, with high-frequency AC currents supplied by the power supply part 112, and by a container. For example, in FIG. 1, the first working coil assembly 122 comprises a first working coil 132 for heating a container placed in a first heating zone 12, and a first heat insulation sheet 130. Though not illustrated, the second working coil assembly 124 comprises a second working coil and a second heat insulation sheet. Depending on embodiments, the heat insulation sheet may be excluded.

Additionally, a temperature sensor is disposed in the central portion of each working coil. For example, in FIG. 1, a temperature sensor 134 is disposed in the central portion of the first working coil 134. The temperature sensor measures the temperature of a container placed in each heating zone. In one embodiment of the present disclosure, the temperature sensor may be a thermistor sensor that has variable resistance where a resistance value varies depending on the temperature of a container, but not be limited.

The temperature sensor in one embodiment of the present disclosure outputs a sensing voltage corresponding to the temperature of a container, and the sensing voltage output from the temperature sensor is transferred to a controller. The controller confirms the temperature of the container, based on the magnitude of the sensing voltage output from the temperature sensor, and when the temperature of the container is a predetermined reference value or greater, performs a predetermined overheat protection operation.

Though not illustrated in FIG. 1, a substrate on which a plurality of circuits or elements comprising the controller is mounted may be disposed in the space of the case 102. The controller drives each working coil according to the user's instruction to initiate heating, which is input through the interface part 114, and performs a heating operation. As the user inputs an instruction to end heating through the interface part 114, the controller stops the driving of the working coil and ends the heating operation.

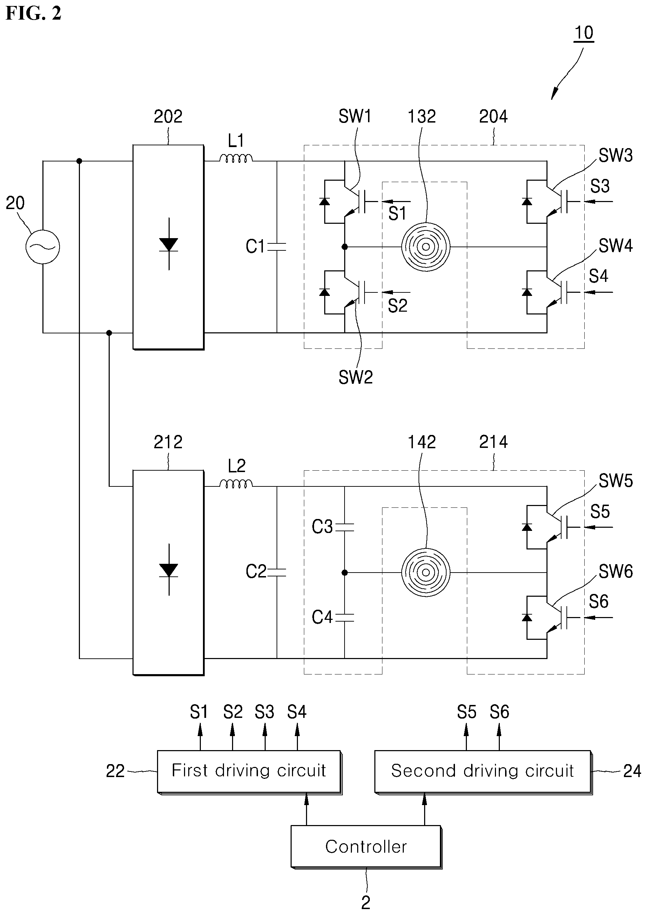

FIG. 2 is a circuit diagram of the induction heating device of one embodiment.

Referring to FIG. 2, the induction heating device 10 of one embodiment comprises a first rectifier circuit 202, a first smoothing circuit L1, C1, a first inverter circuit 204, a first working coil 132, a second rectifier circuit 212, a second smoothing circuit L2, C2, a second inverter circuit 214, and a second working coil 142, a first driving circuit 22, a second driving circuit 24, and a controller 2.

The first rectifier circuit 202 and the second rectifier circuit 212 rectify an AC input voltage supplied from an input power source 20 and respectively output a voltage having a pulse waveform. The first rectifier circuit 202 and the second rectifier circuit 212 may be respectively a circuit (e.g., a bridge rectifier circuit) comprising a plurality of diode elements.

The first smoothing circuit L1, C1 and the second smoothing circuit L2, C2 smooth the voltage rectified by the first rectifier circuit 202 and the second rectifier circuit 212 and respectively output a DC link voltage. The first smoothing circuit L1, C1 comprises a first inductor L1 and a first DC link capacitor C1, and the second smoothing circuit L2, C2 comprises a second inductor L2 and a second DC link capacitor C2.

The first inverter circuit 204 and the second inverter circuit 214 convert the DC link voltage output from the first smoothing circuit L1, C1 and the second smoothing circuit L2, C2 respectively to an AC voltage for driving the first working coil 132 and the second working coil 142.

In one embodiment of the present disclosure, the first inverter circuit 204 and the second inverter circuit 214 may be comprised of a different topology. For example, as illustrated in FIG. 2, the first inverter circuit 204 may be embodied as a full bridge inverter circuit comprising four switching elements, i.e., a first switching element SW1, a second switching element SW2, a third switching element SW3 and a fourth switching element SW4, and the second inverter circuit 214 may be embodied as a half bridge inverter circuit comprising two switching elements, i.e., a fifth switching element SW5, a sixth switching element SW6 and two capacitors C3, C4. However, the topology of the first inverter circuit 204 and the second inverter circuit 214 may vary depending on embodiments.

The topologies of the first inverter circuit 204 and the second inverter circuit 214 differ as described above, such that a first driving frequency of the first working coil 132 that is driven by the first inverter circuit 204, and a second driving frequency of the second working coil 142 that is driven by the second inverter circuit 204 may be set differently. When two inverter circuits are respectively embodied as a full bridge inverter circuit and a half bridge inverter circuit as illustrated in FIG. 2, a difference between the driving frequencies of the working coils increases. Accordingly, as will be described later, when the driving frequency is adjusted to remove interference noise, the amount of adjustment of the driving frequency decreases.

The first switching element SW1 and the second switching element SW2, included in the first inverter circuit 204, are alternately turned on/turned off by a first switching signal S 1 and a second switching signal S2 output from a first driving circuit 22. Additionally, the third switching element SW3 and the fourth switching element SW4, included in the first inverter circuit 204, are alternately turned on/turned off by a third switching signal S3 and a fourth switching signal S4 output from the first driving circuit 22.

Further, the fifth switching element SW5 and the sixth switching element SW6, included in the second inverter circuit 214, are alternately turned on/turned off by a fifth switching signal S5 and a sixth switching signal S6 output from a second driving circuit 24.

In the present disclosure, two switching elements' being turned on/turned off alternately denotes that one switching element is turned on while the other switching element is turned off. For example, in FIG. 2, the first switching element SW 1 and the third switching element SW3 are turned on while the second switching element SW2 and the fourth switching element SW4 are turned off. When the first switching element SW1 and the third switching element SW3 are turned off while the second switching element SW2 and the fourth switching element SW4 are turned on. Since the switching elements' alternate turn-on/turn-off is repeated, a DC link voltage input to each inverter circuit 204, 214 is converted into an AC voltage. Thus, AC current for driving each working coil 132, 142 is supplied to each working coil 132, 142.

In the present disclosure, the first switching signal S 1, the second switching signal S2, the third switching signal S3, the fourth switching signal S4, the fifth switching signal S5 and the sixth switching signal S6 are respectively a pulse width modulation (PWM) signal that has a predetermined duty ratio.

As AC current output from the first inverter circuit 204 is supplied to the first working coil 132, the first working coil 132 operates. As the first working coil 132 operates, while eddy current flows in a container placed on the first working coil 132, the container is heated. Likewise, as AC current output from the second inverter circuit 214 is supplied to the second working coil 142, the second working coil 142 operates. The magnitude of heat energy supplied to a container varies depending on the magnitude of power that is generated as each working coil operates, i.e., the output value of each working coil.

The controller 2 determines a driving frequency of each working coil 132, 142 such that the driving frequency corresponds to each heating zone's power level set by the user. In one embodiment of the present disclosure, the controller 2 may determine a driving frequency of each working coil 132, 142 with reference to a table data on which driving frequencies corresponding to power levels are recorded or a relational expression (or a function) between each power level and each driving frequency.

The controller 2 supplies a control signal corresponding to the determined driving frequency to each driving circuit 22, 24. Each of the driving circuits 22, 25 outputs a switching signal S1, S2, S3, S4, S5, S6 having a duty ratio corresponding to the diving frequency determined by the controller 220, based on the control signal output from the controller 2.

As the user turns on (powers on) the induction heating device 10 by manipulating a control interface of the induction heating device 10, power is supplied from the input power source 20 to the induction heating device, and the induction heating device is put on standby for driving. Then the user places a container on a working coil of the induction heating device, and gives an instruction to initiate heating to the working coil by setting a power level for the container. As the user gives the instruction to initiate heating, an output value required of the working coil 132, i.e., a required output value, is determined based on the power level set by the user.

Having received the user's instruction to initiate heating, the controller 220 sets a driving frequency corresponding to the required output value and supplies a control signal corresponding to the set driving frequency to the driving circuit 22, 24. Accordingly, as switching signals S1, S2, S3, S4, S5, S6 are output from the driving circuit 22, 24, the working coil 132, 142 operates. As the working coil 132, 142 operates, the container is heated while eddy current flows in the container.

Additionally, as the first working coil 132 and the second working coil 142 operate respectively after the user sets a power level of the first heating zone 12 and a power level of the second heating zone 14, the above-described interference noise may be generated. The controller 2 in one embodiment calculates a difference between a first driving frequency of the first working coil 132 and a second driving frequency of the second working coil 142, compares the calculated difference with a predetermined reference range and performs noise avoidance control. In the present disclosure, the difference between the first driving frequency and the second driving frequency denotes a value obtained by subtracting the lower of the two driving frequencies from the higher of the two driving frequencies.

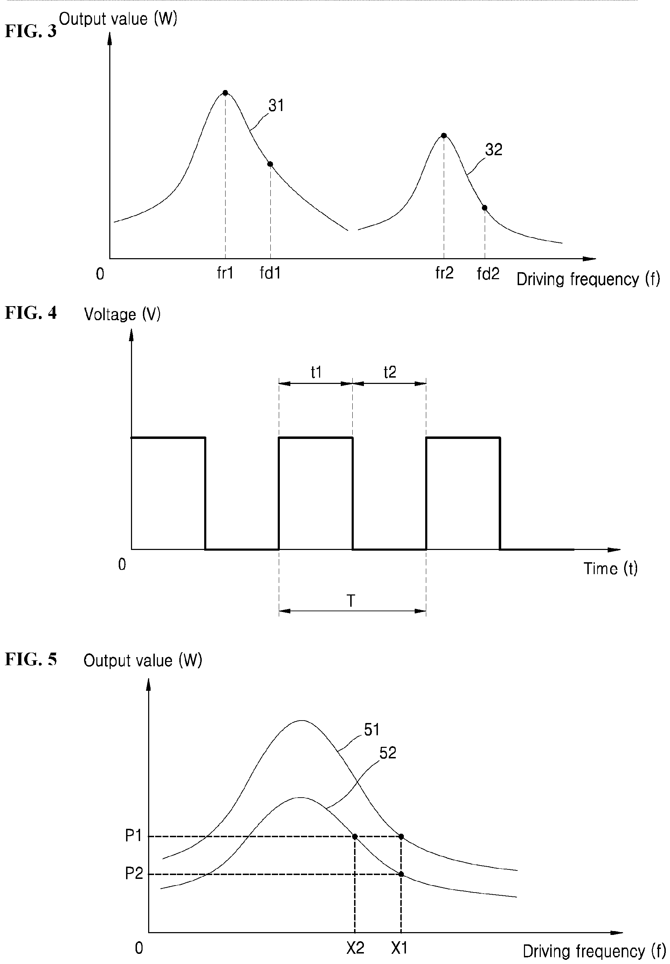

FIG. 3 is a graph showing output values corresponding to driving frequencies of each working coil when two working coils operate.

FIG. 3 is a graph 31 showing output values based on driving frequencies of the first working coil 132, and a graph 32 showing output values based on driving frequencies of the second working coil 142, respectively.

As illustrated in FIG. 3, the magnitude of a resonance frequency fr1 of the first working coil 132 is less than that of a resonance frequency fr2 of the second working coil 142. Accordingly, the magnitude of the first driving frequency fd1 of the first working coil 132 is also less than that of the second driving frequency fd2 of the second working coil 142.

In one embodiment of the present disclosure, the driving frequency of each working coil is greater than a limiting frequency. The limiting frequency is the same as or greater than the resonance frequency of each working coil. Accordingly, as the magnitude of the driving frequency of each working coil increases as illustrated in FIG. 3, the output value of each working coil decreases.

The controller 2 calculates a difference between the first driving frequency fd1 of the first working coil 132 and the second driving frequency fd2 of the second working coil 142, and compares the calculated difference with a first predetermined reference range and a second predetermined reference range and performs noise avoidance control.

In one embodiment of the present disclosure, the first reference range and the second reference range may vary respectively depending on embodiments. For example, the first reference range may be set to 8 kHz or greater and less than 20 kHz, and the second reference range may be set to 2 kHz or greater and less than 8 kHz. However, the boundary values (e.g., 2, 8 and 20) of the first reference range and the second reference range may vary depending on embodiments.

If the difference between the first driving frequency and the second driving frequency is included in the first reference range, the controller 2 performs divide mode noise avoidance control. In the present disclosure, the divide mode noise avoidance control denotes changing the difference between the first driving frequency and the second driving frequency to a value greater than a maximum boundary value (e.g., 20 kHz) of an audio frequency band (e.g., 2 kHz to 20 kHz) and removing interference noise.

As the divide mode noise avoidance control starts, the controller 2 adjusts a duty ratio of a switching signal input to the first inverter circuit 204 having the first driving frequency less than the second driving frequency and adjusts the magnitude of the first driving frequency, and sets the difference between the first driving frequency and the second driving frequency to be equal to a predetermined noise avoidance value (e.g., 22 kHz). Under the control, the difference between the first driving frequency and the second driving frequency are outside the audio frequency band, and interference noise is removed. The noise avoidance value varies depending on embodiments.

If the difference between the first driving frequency and the second driving frequency is included in the second reference range, the controller 2 performs coupling mode noise avoidance control. In the present disclosure, the coupling mode noise avoidance control denotes changing the difference between the first driving frequency and the second driving frequency to 0 that is a value not included in the audio frequency band (e.g., 2 kHz to 20 kHz) and removing interference noise.

As the coupling mode noise avoidance control starts, the controller 2 sets the first driving frequency and the second driving frequency to the same value. In an example, the controller 2 increases the magnitude of the first driving frequency to be equal to the second frequency value or decreases the magnitude of the second driving frequency to be equal to the first driving frequency. In another example, the controller 2 may change the first driving frequency and the second driving frequency respectively to a predetermined frequency. Under the control, the difference between the first driving frequency and the second driving frequency becomes 0, causing no interference noise.

If the difference between the first driving frequency and the second driving frequency is not included in the first reference range and the second reference range, the controller 2 does not change the first driving frequency and the second driving frequency. The difference between the first driving frequency and the second driving frequency outside the first reference range and the second reference range denotes that the difference between the first driving frequency and the second driving frequency is outside the audio frequency band and that interference noise is not generated. Accordingly, the controller 2 does not change the first driving frequency and the second driving frequency and maintains the first driving frequency and the second driving frequency.

FIG. 4 is a waveform diagram for describing duty ratios of switching signals input to an inverter circuit of the induction heating device of one embodiment.

When the difference between the first driving frequency and the second driving frequency is included in the first reference range as described above, the controller 2 adjusts the duty ratio of the switching signal input to the first inverter circuit and the magnitude of the first driving frequency, and sets the difference between the first driving frequency and the second driving frequency to be equal to the noise avoidance value.

FIG. 4 shows the wave form of a switching signal input to the first inverter circuit 204 or the second inverter circuit 214 of the induction heating device 10 according to the present disclosure. As illustrated, the voltage of the switching signal changes to a high level or a low level alternately depending on a predetermined cycle T. When the voltage of the switching signal is at a high level, the switching element is turned on, and when the voltage of the switching signal is at a low level, the switching element is turned off.

The section where the voltage of the switching signal is at a high level within one cycle T of the switching signal is referred to as an on-duty section, and the section where the voltage of the switching signal is at a low level is referred to as an off-duty section. In the present disclosure, the duty ratio of a switching signal is defined as a ratio of the on-duty section t1 in one cycle T of the switching signal. In an example, under the assumption that one cycle of a switching signal is 1 second and the time of the on-duty section is 0.5 second, the duty ratio of the switching signal is 0.5 or 50 %. In another example, under the assumption that one cycle of a switching signal is one second and that the time of the on-duty section is 0.2 second, the duty ratio of the switching signal is 0.2 or 20%.

Additionally, the switching signals provided to the inverter circuit are alternately at a high level voltage and a low level voltage. In an example, when the voltages of the first switching element SW1 and the third switching element SW3 input to the first inverter circuit 204 are at a high level, the voltages of the second switching signal SW2 and the fourth switching signal SW4 are at a low level. In another example, when the voltage of the fifth switching signal SW5 input to the second inverter circuit 214 is at a low level, the voltage of the sixth switching signal SW6 is at a high level.

Hereafter, a control method according to the present disclosure is described based on the controller 2's adjustment of the duty ratios of the first switching signal SW1 and the third switching signal SW3 among the switching signals input to the first inverter circuit 204. However, in another embodiment, the controller 2 may also adjust the duty ratios of the second switching signal SW2 and the fourth switching signal SW4.

FIG. 5 is a graph showing a change in the output values of a working coil, based on the adjustment of duty ratios of switching signals input to the inverter circuit of the induction heating device of one embodiment and the adjustment of driving frequencies of the working coil.

FIG. 5 respectively shows a graph 51 that shows the driving frequency and the output value of the first working coil 132 when the duty ratio of the first switching signal SW1 and the third switching signal SW3 input to the first inverter circuit 204 is 50 %, and a graph 52 that shows the driving frequency and the output value of the first working coil 132 when the duty ratio of the first swishing signal SW1 and the third switching signal SW3 input to the first inverter circuit 204 is 20%.

In one embodiment of the present disclosure, as the controller 2 adjusts the duty ratio of the switching signal input to the inverter circuit as illustrated in FIG. 5, the output value corresponding to the driving frequency of the working coil changes.

For example, when the first working coil 132 operates at a driving frequency of X1 at the first switching signal SW1 and the third switching signal SW3's duty ratio of 50 %, an actual output value of the first working coil 132 becomes P1.

If the driving frequency of the first working coil 132 changes to X2 in the state where the duty ratio of the first switching signal SW1 and the third switching signal SW3 is maintained at 50 %, The actual output value of the first working coil 132 becomes much greater than P1. Accordingly, the actual output value of the first working coil 132 becomes greater than a first required output value of the first working coil 132, corresponding to a power level set by the user.

However, when the duty ratio of the first switching signal SW1 and the third switching signal SW3 decreases to 20 % in the state where the driving frequency of the first working coil 132 is maintained at X1, the actual output value of the first working coil 132 decreases to P2.

Additionally, when the driving frequency of the first working coil 132 decreases to X2 in the state where the duty ratio of the first switching signal SW1 and the third switching signal SW3 is maintained at 20 %, the actual output value of the first working coil 132 becomes P1 again.

Under the control, when the controller 2 changes the driving frequency of the first working coil 132 from X1 to X2, the actual output value of the first working coil 132 may not increase and be maintained at P1.

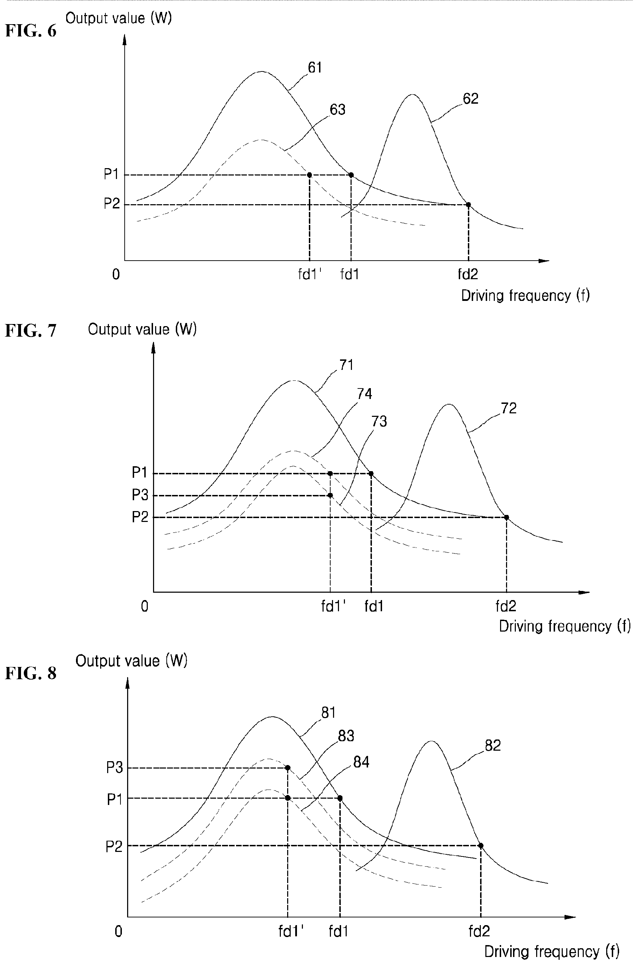

Hereafter, embodiments in relation to the controller 2's performance of the divide mode noise avoidance control in the induction heating device of one embodiment are described with reference to FIGS. 6 to 8. In the embodiments of FIGS. 6 to 8, the magnitude of the first driving frequency fd1 is less than the magnitude of the second driving frequency fd2.

FIG. 6 is a graph showing a change in the driving frequency and output value of a working coil, under the divide mode noise avoidance control of the induction heating device of one embodiment.

FIG. 6 respectively shows a graph 61 that shows the driving frequency and the output value of the first working coil 132 when the duty ratio of the first switching signal SW1 and the third switching signal SW3 input to the first inverter circuit 204 is 50 %, and a graph 62 that shows the driving frequency and the output value of the second working coil 142 when the duty ratio of the fifth swishing signal SW5 input to the second inverter circuit 214 is 20 %.

As the user sets power levels of the first heating zone 12 and the second heating zone 14 respectively and inputs an instruction to initiate heating, the controller 2 provides a control signal respectively to the first driving circuit 22 and the second driving circuit 24. Accordingly, the first working coil 132 operates at a first driving frequency fd1 corresponding to a first required output value of P1 corresponding to the power level set by the user. Further, the second working coil 142 operates at a second driving frequency fd2 corresponding to a second required output value of P2 corresponding to the power level set by the user.

As the first working coil 132 and the second working coil 142 operate respectively, the controller 2 calculates a difference between the first driving frequency fd1 of the first working coil 132 and the second driving frequency fd2 of the second working coil 142.

The controller 2 determines whether the calculated difference between the first driving frequency fd1 and the second driving frequency fd2 are included in the first reference range (8 kHz or greater and less than 20 kHz). When the difference between the first driving frequency fd1 and the second driving frequency fd2 is included in the first reference range (8 kHz or greater and less than 20 kHz) as a result of the determination, the controller 2 performs the divide mode noise avoidance control to remove interference noise.

As the divide mode noise avoidance control starts, the controller 2 changes the duty ratios of the first switching signal SW1and the third switching signal SW3 input to the first inverter circuit 204 to a predetermined reference duty ratio (e.g., 20 %). Accordingly, the output value of the first working coil 132 in graph 63 becomes entirely less than the output value of the first working coil 132 in graph 61 where the duty ratio is 50 %, at the same driving frequency.

The reference duty ratio may vary depending on embodiments. In one embodiment of the present disclosure, the reference duty ratio may be set to the lowest ( a minimum duty ratio) of the duty ratios of the first switching signal SW1 and the third switching signal SW3, which can be set by the controller 2, but not limited.

After changing the duty ratios of the first switching signal SW1 and the third switching signal SW3 to the predetermined reference duty ratio (e.g., 20 %), the controller 2 changes the driving frequency of the first working coil 132 to a noise avoidance frequency fd1'. The noise avoidance frequency fd1' is set to a value fd2-22kHz obtained by subtracting the noise avoidance value (22 kHz) from the second driving frequency fd2.

After the driving frequency of the first working coil 132 changes to the noise avoidance frequency fd1', the controller 2 determines whether the actual output value of the first working coil 132 is the same as the first required output value set by the user. Since the actual output value of the first working coil 132 is maintained at the same value as the first required output value of P1 as illustrated in FIG. 6, the controller 2 ends the divide mode noise avoidance control.

If the driving frequency of the first working coil 132 changes to the noise avoidance frequency fd 1' in the state where the duty ratios of the first switching signal SW 1 and the third switching signal SW3 are 50 %, the actual output value of the first working coil 132 becomes greater than the first working coil 132's first required output value of P1 set by the user.

However, in the control method of the present disclosure, as the driving frequency of the first working coil 132 changes to the noise avoidance frequency fd1' after the duty ratios of the first switching signal SW1 and the third switching signal SW3 decrease to the reference duty ratio, the actual output value of the first working coil 132 may be maintained at the same value as the first working coil 132's first required output value of P1 set by the user.

Further, as the driving frequency of the first working coil 132 changes to the noise avoidance frequency fd1', interference noise is removed since a difference 22 kHz between the noise avoidance frequency fd1', which is the driving frequency of the first working coil 132, and the second driving frequency fd2 is not included in the audio frequency band (2 kHz to 20 kHz).

FIG. 7 is a graph showing a change in the driving frequency and output value of a working coil, under a divide mode noise avoidance control of an induction heating device of another embodiment.

FIG. 7 respectively shows a graph 71 that shows the driving frequency and the output value of a first working coil 132 when the duty ratio of a first switching signal SW1 and a third switching signal SW3 input to a first inverter circuit 204 is 50 %, and a graph 72 that shows the driving frequency and the output value of a second working coil 142 when the duty ratio of a fifth swishing signal SW5 input to a second inverter circuit 214 is 50 %.

As the user sets power levels of the first heating zone 12 and the second heating zone 14 respectively and inputs an instruction to initiate heating, a controller 2 provides a control signal respectively to the first driving circuit 22 and the second driving circuit 24. Accordingly, the first working coil 132 operates at a first driving frequency fd1 corresponding to a first required output value of P1 corresponding to the power level set by the user. Further, the second working coil 142 operates at a second driving frequency fd2 corresponding to a second required output value of P2 corresponding to the power level set by the user.

As the first working coil 132 and the second working coil 142 operate respectively, the controller 2 calculates a difference between the first driving frequency fd1 of the first working coil 132 and the second riving frequency fd2 of the second working coil 142.

The controller 2 determines whether the calculated difference between the first driving frequency fd1 and the second riving frequency fd2 is included in the first reference range (8 kHz or greater and less than 20 kHz). When the difference between the first driving frequency fd1 and the second riving frequency fd2 is included in the first reference range (8 kHz or greater and less than 20 kHz) as a result of the determination, the controller 2 performs the divide mode noise avoidance control to remove interference noise.

As the divide mode noise avoidance control starts, the controller 2 changes the duty ratios of the first switching signal SW1and the third switching signal SW3 input to the first inverter circuit 204 to a predetermined reference duty ratio (e.g., 20 %). Accordingly, the output value of the first working coil 132 in graph 73 becomes entirely less than the output value of the first working coil 132 in graph 71 where the duty ratio is 50 %, at the same driving frequency.

The reference duty ratio may vary depending on embodiments. In one embodiment of the present disclosure, the reference duty ratio may be set to the lowest ( a minimum duty ratio) of the duty ratios of the first switching signal SW1 and the third switching signal SW3, which can be set by the controller 2, but not limited.

After changing the duty ratios of the first switching signal SW1 and the third switching signal SW3 to the predetermined reference duty ratio (e.g., 20 %), the controller 2 changes the driving frequency of the first working coil 132 to a noise avoidance frequency fd1'. The noise avoidance frequency fd1' is set to a value fd2-22kHz obtained by subtracting the noise avoidance value (22 kHz) from the second driving frequency fd2.

After the driving frequency of the first working coil 132 changes to the noise avoidance frequency fd1', the controller 2 determines whether the actual output value of the first working coil 132 is the same as the first required output value set by the user. When the duty ratios of the first switching signal SW1 and the third switching signal SW3 are the reference duty ratio (20 %), and the driving frequency of the first working coil 132 is the noise avoidance frequency fd1' as illustrated in FIG. 7, the actual output value of the first working coil 132 becomes P3 less than the first required output value of P1.

Since the actual output value of the first working coil 132 is less than the first required output value of P1 set by the user as a result of the determination, the controller 2 increases the duty ratios of the first switching signal SW 1 and the third switching signal SW3 to a value (e.g., 30 %) greater than the reference duty ratio. Accordingly, the output value of the first working coil 132 in graph 74 becomes entirely greater than the output value of the first working coil 132 in graph 73 where the duty ratio is 20 %, at the same driving frequency.

After the duty ratios of the first switching signal SW1 and the third switching signal SW3 change to 30 %, the controller 2 determines whether the actual output value of the first working coil 132 is the same as the first required output value set by the user. Since the actual output value of the first working coil 132 is the same as the first required output value of P1 as a result of the determination, the controller 2 ends the divide mode noise avoidance control.

FIG. 8 is a graph showing a change in the driving frequency and output value of a working coil, under a divide mode noise avoidance control of an induction heating device of yet another embodiment.

FIG. 8 respectively shows a graph 81 that shows the driving frequency and the output value of a first working coil 132 when the duty ratio of a first switching signal SW1 and a third switching signal SW3 input to a first inverter circuit 204 is 50 %, and a graph 82 that shows the driving frequency and the output value of a second working coil 142 when the duty ratio of a fifth swishing signal SW5 input to a second inverter circuit 214 is 50 %.

As the user sets power levels of the first heating zone 12 and the second heating zone 14 respectively and inputs an instruction to initiate heating, a controller 2 provides a control signal respectively to the first driving circuit 22 and the second driving circuit 24. Accordingly, the first working coil 132 operates at a first driving frequency fd1 corresponding to a first required output value of P1 corresponding to the power level set by the user. Further, the second working coil 142 operates at a second driving frequency fd2 corresponding to a second required output value of P2 corresponding to the power level set by the user.

As the first working coil 132 and the second working coil 142 operate respectively, the controller 2 calculates a difference between the first driving frequency fd1 of the first working coil 132 and the second riving frequency fd2 of the second working coil 142.

The controller 2 determines whether the calculated difference between the first driving frequency fd1 and the second riving frequency fd2 is included in the first reference range (8 kHz or greater and less than 20 kHz). When the difference between the first driving frequency fd1 and the second riving frequency fd2 is included in the first reference range (8 kHz or greater and less than 20 kHz) as a result of the determination, the controller 2 performs the divide mode noise avoidance control to remove interference noise.

As the divide mode noise avoidance control starts, the controller 2 changes the duty ratios of the first switching signal SW1and the third switching signal SW3 input to the first inverter circuit 204 to a predetermined reference duty ratio (e.g., 30 %). Accordingly, the output value of the first working coil 132 in graph 83 becomes entirely less than the output value of the first working coil 132 in graph 81 where the duty ratio is 50 %, at the same driving frequency.

The reference duty ratio may vary depending on embodiments. In one embodiment of the present disclosure, the reference duty ratio may be set to the lowest (a minimum duty ratio) of the duty ratios of the first switching signal SW1 and the third switching signal SW3, which can be set by the controller 2, but not limited.

After changing the duty ratios of the first switching signal SW1 and the third switching signal SW3 to the predetermined reference duty ratio (e.g., 30 %), the controller 2 changes the driving frequency of the first working coil 132 to a noise avoidance frequency fd1'. The noise avoidance frequency fd1' is set to a value fd2-22kHz obtained by subtracting the noise avoidance value (22 kHz) from the second driving frequency fd2.

After the driving frequency of the first working coil 132 changes to the noise avoidance frequency fd1', the controller 2 determines whether the actual output value of the first working coil 132 is the same as the first required output value set by the user. When the duty ratios of the first switching signal SW1 and the third switching signal SW3 are the reference duty ratio (30 %), and the driving frequency of the first working coil 132 is the noise avoidance frequency fd1' as illustrated in FIG. 8, the actual output value of the first working coil 132 becomes P3 greater than the first required output value of P1.

Since the actual output value of the first working coil 132 is greater than the first required output value of P1 set by the user as a result of the determination, the controller 2 decreases the duty ratios of the first switching signal SW1 and the third switching signal SW3 to a value (e.g., 20 %) less than the reference duty ratio. Accordingly, the output value of the first working coil 132 in graph 84 becomes entirely less than the output value of the first working coil 132 in graph 83 where the duty ratio is 30 %, at the same driving frequency.

After the duty ratios of the first switching signal SW1 and the third switching signal SW3 change to 20 %, the controller 2 determines whether the actual output value of the first working coil 132 is the same as the first required output value set by the user. Since the actual output value of the first working coil 132 is the same as the first required output value of P1 as a result of the determination, the controller 2 ends the divide mode noise avoidance control.

As shown in the embodiments of FIGS. 6 to 8, in the divide mode noise avoidance control performed by the controller 2 of the induction heating device 10 according to the present disclosure, the duty ratio of a switching signal input to the inverter circuit of a driving frequency (e.g., a first driving frequency) having a relatively small magnitude changes to the reference duty ratio. Then since the driving frequency (e.g., the first driving frequency) having a relatively small magnitude changes to the noise avoidance frequency, interference noise caused by a simultaneous operation of the first working coil 132 and the second working coil 142 is removed.

When the actual output value of the working coil (e.g., the first working coil 132) the driving frequency of which changes is different from the first required output value set by the user after the interference noise is removed based on the change in the frequency, the controller 2 additionally adjusts the duty ratio of the switching signal input to the inverter circuit of the driving frequency (e.g., the first driving frequency) having a relatively small magnitude. Based on the control, even after the interference noise is removed, the actual output value of each working coil may be maintained to be the same as the first required output value set by the user.

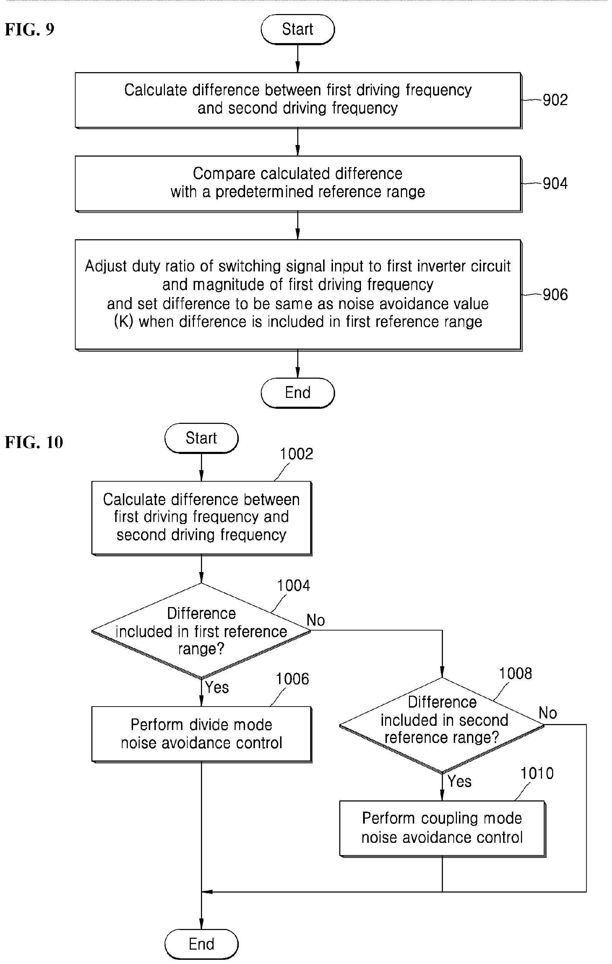

FIG. 9 is a flowchart showing a control method of an induction heating device of one embodiment.

As a first working coil 132 operates at a first driving frequency while a second working coil 142 operates at a second driving frequency greater than the first driving frequency, a controller 2 calculates a difference between the first driving frequency and the second driving frequency (902).

The controller 2 compares the calculated difference between the first driving frequency and the second driving frequency with a predetermined reference range (904). In one embodiment of the present disclosure, the reference range may comprise a first reference range for divide mode noise avoidance control, and a second reference range for coupling mode noise avoidance control.

When the difference between the first driving frequency and the second driving frequency is included in the first reference range as a result of the comparison, the controller 2 adjusts the duty ratio of a switching signal S1, S3 input to a first inverter circuit 204 that supplies electric current to the first working coil 132, and the magnitude of the first driving frequency, and sets the difference between the first driving frequency and the second driving frequency to be equal to a predetermined noise avoidance value K (906).

In one embodiment of the present disclosure, step 906 comprises changing the duty ratio of the switching signal input to the first inverter circuit 204 to a predetermined reference duty ratio and changing the magnitude of the first driving frequency to a noise avoidance frequency when the difference between the first driving frequency and the second driving frequency is included in the first predetermined reference range. The noise avoidance frequency is defined as a value obtained by subtracting the noise avoidance value k from the second driving frequency.

In one embodiment of the present disclosure, step 906 comprises increasing the duty ratio of the switching signal input to the first inverter circuit 204 when the actual output value of the first working coil 132 is less than a first required output value of the first working coil 132 after the magnitude of the first driving frequency changes.

In one embodiment of the present disclosure, step 906 comprises decreasing the duty ratio of the switching signal input to the first inverter circuit 204 when the actual output value of the first working coil 132 is greater than the first required output value after the magnitude of the first driving frequency changes.

Based on the above-described control, after the duty ratio of the switching signal input to the first inverter circuit 204 is adjusted, the actual output value of the first working coil 132 is maintained to be the same as the first required output value.

FIG. 10 is a flowchart showing a control method of an induction heating device of another embodiment.

As a first working coil 132 operates at a first driving frequency while a second working coil 142 operates at a second driving frequency greater than the first driving frequency, a controller 2 calculates a difference between the first driving frequency and the second driving frequency (1002).

The controller 2 determines whether the calculated difference between the first driving frequency and the second driving frequency is included in a first reference range (e.g., 8 kHz or grater and less than 20 kHz) (1004). When the difference between the first driving frequency and the second driving frequency is included in the first reference range as a result of the determination, the controller 2 performs divide mode noise avoidance control (1006) and removes interference noise caused by a simultaneous operation of the first working coil 132 and the second working coil 142.

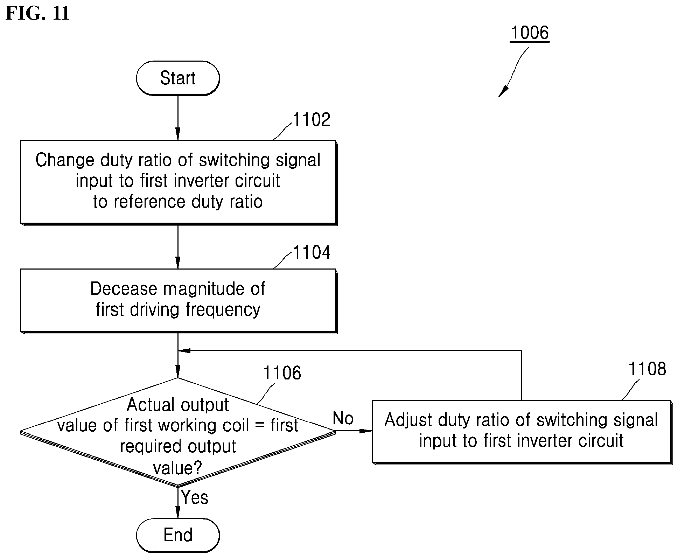

FIG. 11 is a flowchart showing a process of performing divide mode noise avoidance control in the control method of an induction heating device of another embodiment.

As the divide mode noise avoidance control (1006) starts, the controller 2 changes the duty ratio of the switching signal (e.g., S1 and S3) input to the first inverter circuit 204 changes to a predetermined reference duty ratio (e.g., 20 %) (1102). The reference duty ratio may vary depending on embodiments.

Then the controller 2 decreases the magnitude of the first driving frequency (1104). In one embodiment of the present disclosure, the controller 2 changes the first driving frequency to a predetermined noise avoidance frequency to decrease the magnitude of the first driving frequency. The noise avoidance frequency is defined as a value obtained by subtracting a noise avoidance value k from the second driving frequency.

After the magnitude of the first driving frequency decreases, the controller 2 determines whether the actual output value of the first working coil 132 is the same as a first required output value of the first working coil 132, set by the user (1106).

When the actual output value of the first working coil 132 is not the same as the first required output value of the first working coil 132, set by the user, as a result of the determination, the controller 2 adjusts the duty ratio of the switching signal (e.g., S1 and S3) input to the first inverter circuit 204 (1108). When the actual output value of the first working coil 132 is less than the first required output value of the first working coil 132, set by the user, in step 1108, the controller 2 increases the duty ratio of the switching signal input to the first inverter circuit 204. On the contrary, when the actual output value of the first working coil 132 is greater than the first required output value of the first working coil 132, set by the user, in step 1108, the controller 2 decreases the duty ratio of the switching signal input to the first inverter circuit 204. After ending the adjustment of the duty ratio, the controller 2 performs step 1106 again.

When determining that the actual output value of the first working coil 132 is the same as the first required output value of the first working coil 132, set by the user, in step 1106, the controller 2 ends the divide mode noise avoidance control (1006).

Referring back to FIG. 10, when determining that the difference between the first driving frequency and the second driving frequency is not included in the first reference range in step 1104, the controller 2 determines whether the difference between the first driving frequency and the second driving frequency is included in the second reference range (e.g., 2 kHz or greater and less than 8 kHz) (1008).

When the difference between the first driving frequency and the second driving frequency is included in the second reference range as a result of the determination, the controller 2 performs coupling mode noise avoidance control (1010). In one embodiment of the present disclosure, the step (101) of performing the coupling mode noise avoidance control comprises setting the first driving frequency and the second driving frequency to the same value.

When the difference between the first driving frequency and the second driving frequency is not included in the second reference range as a result of the determination in step 1008, the controller 2 maintains the first driving frequency and the second driving frequency since interference noise is not caused by a simultaneous operation of the first working coil 132 and the second working coil 142.

In the above-described control method according to the present disclosure, interference noise caused by a simultaneous operation of two working coils is removed. Additionally, in the process of adjusting the driving frequency of a working coil to remove interference noise, the actual output value of the working coil may be maintained to be the same as the required output value.

The embodiments are described above with reference to a number of illustrative embodiments thereof. However, embodiments are not limited to the embodiments and drawings set forth herein, and numerous other modifications and embodiments can be made by one skilled in the art within the technical scope of the disclosure. Further, predictable effects as well as the effects based on the configurations in the disclosure are to be included within the scope of the disclosure though not explicitly described in the description of the embodiments.

## Claims

1. An induction heating device, comprising:
a first working coil;
a first inverter circuit configured to operate at a first driving frequency that corresponds to a first required output value of the first working coil and supplying electric current to the first working coil;
a second working coil;
a second inverter circuit configured to operate at a second driving frequency that corresponds to a second required output value of the second working coil and is greater than the first driving frequency, and supplying electric current to the second working coil; and
a controller configured to set a difference between the first driving frequency and the second driving frequency to be equal to a predetermined noise avoidance value by adjusting a duty ratio of a switching signal input to the first inverter circuit and magnitude of the first driving frequency, when the difference between the first driving frequency and the second driving frequency is included in a first predetermined reference range.

2. The induction heating device of claim 1, wherein when the difference between the first driving frequency and the second driving frequency is included in the first predetermined reference range, the controller changes the duty ratio of the switching signal input to the first inverter circuit to a predetermined reference duty ratio and changes the first driving frequency to a predetermined noise avoidance frequency.

3. The induction heating device of claim 2, wherein the noise avoidance frequency is a value obtained by subtracting the noise avoidance value from the second driving frequency.

4. The induction heating device of claim 2, wherein the controller increases the duty ratio of the switching signal input to the first inverter circuit when an actual output value of the first working coil is less than the first required output value after the magnitude of the first driving frequency changes.

5. The induction heating device of claim 2, wherein the controller decreases the duty ratio of the switching signal input to the first inverter circuit when an actual output value of the first working coil is greater than the first required output value after the magnitude of the first driving frequency changes.

6. The induction heating device of claim 1, wherein an actual output value of the first working coil is maintained to be the same as the first required output value after the duty ratio of the switching signal input to the first inverter circuit is adjusted.

7. The induction heating device of claim 1, wherein the controller sets the first driving frequency and the second driving frequency to the same value when the difference between the first driving frequency and the second driving frequency is included in a second predetermined reference range.

8. A control method of an induction heating device, which comprises a first working coil, a first inverter circuit configured to operate at a first driving frequency that corresponds to a first required output value of the first working coil and supplying electric current to the first working coil, a second working coil, and a second inverter circuit configured to operate at a second driving frequency that corresponds to a second required output value of the second working coil and is greater than the first driving frequency and supplying electric current to the second working coil, comprising:
calculating a difference between the first driving frequency and the second diving frequency;
comparing the difference between the first driving frequency and the second driving frequency with a predetermined reference range; and
setting the difference between the first driving frequency and the second driving frequency to be equal to a predetermined noise avoidance value by adjusting a duty ratio of a switching signal input to the first inverter circuit and magnitude of the first driving frequency, when the difference between the first driving frequency and the second driving frequency is included in a first predetermined reference range.

9. The control method of claim 8, setting the difference between the first driving frequency and the second driving frequency to be equal to a predetermined noise avoidance value, comprising:
changing the duty ratio of the switching signal input to the first inverter circuit to a predetermined reference duty ratio when the difference between the first driving frequency and the second driving frequency is included in the first predetermined reference range; and
changing the magnitude of the first driving frequency to a predetermined noise avoidance frequency.

10. The control method of claim 9, wherein the noise avoidance frequency is a value obtained by subtracting the noise avoidance value from the second driving frequency.

11. The control method of claim 9, wherein setting the difference between the first driving frequency and the second driving frequency to be equal to a predetermined noise avoidance value, further comprising:
increasing the duty ratio of the switching signal input to the first inverter circuit when an actual output value of the first working coil is less than the first required output value after the magnitude of the first driving frequency changes.

12. The control method of claim 9, wherein setting the difference between the first driving frequency and the second driving frequency to be equal to a predetermined noise avoidance value, further comprising:
decreasing the duty ratio of the switching signal input to the first inverter circuit when an actual output value of the first working coil is greater than the first required output value after the magnitude of the first driving frequency changes.

13. The control method of claim 8, wherein an actual output value of the first working coil is maintained to be the same as the first required output value after the duty ratio of the switching signal input to the first inverter circuit is adjusted.

14. The control method of claim 8, wherein the control method further comprises setting the first driving frequency and the second driving frequency to the same value when the difference between the first driving frequency and the second driving frequency is included in a second predetermined reference range.
